# EUROPEAN PATENT SPECIFICATION

(11) **EP 4 163 557 B1**
(45) Date of publication and mention of the grant of the patent: **15.01.2025**
(21) Application number: 22200082.0
(22) Date of filing: 06.10.2022
(51) Int. Cl.: F24F 5/00, F24F 1/0007, F24F 11/30, F24F 11/74, F24F 11/86, F24F 11/65, F24F 1/0003

(54) **SYSTEM FOR HEATING AND COOLING ROOMS**
SYSTEM ZUM KÜHLEN UND HEIZEN VON RÄUMEN
SYSTÈME POUR CHAUFFER ET REFROIDIR DES PIÈCES

(30) Priority: 07.10.2021 IT 202100025595
(43) Date of publication of application: 12.04.2023
(73) Proprietor: ARISTON S.P.A., 60044 Fabriano (AN) (IT)
(72) Inventor: MARRA, Lorenzo, 60027 Osimo (IT)
(74) Representative: Savi, Massimiliano

(56) References cited:
- EP-A1- 3 337 000
- AU-A4- 2011 100 120
- KR-A- 20190 110 405
- US-A1- 2005 086 958
- US-A1- 2021 095 882

## Description

### FIELD OF THE INVENTION

The present invention relates to the technical field of systems for heating and/or cooling indoor spaces by means of radiating panels fed by heat-carrying fluids such as water.

### BACKGROUND ART

The floor panels in radiating systems are used to raise and/or lower the room temperature in order to reach the target temperature set by the end user.

The room temperature, set by the end user conventionally by means of a daily/weekly hourly scheduler, may be a fixed value used during the 24 hours, as well as a value which changes during the 24 hours and according to the days of the week.

Floor panels provide the advantage of being capable of distributing the heat/cold in uniform manner through the entire surface of the rooms, for example in homes, while minimizing the convective motions which induce discomfort in the case of thermo-syphons (for the heating mode alone) and fan coils (for the heating and cooling mode) and the related non-homogeneity of the temperature in the rooms.

There are multiple disadvantages in the systems using radiating floor panels and they are discussed below.

The power which may be emitted by the floor in heating/cooling mode is limited to maximum values to avoid feet from being excessively heated/cooled.

Moreover, again in heating/cooling mode, the high thermal inertia of the screed makes the response times very long (several days may be required to heat a home when the floor system has been switched OFF for a long period of time).

The high inertia may cause problems for regulating the room temperature because phenomena of the room temperature oscillating around the set temperature may be generated, especially in low inertia homes, which are typical of new construction.

The problem of high thermal inertia is currently resolved either with floor systems with reduced thickness of the screed or even dry floor systems, therefore with minimized inertia, or by employing ceiling or wall radiating systems as an alternative or in addition to the floor panels.

On the other hand, systems of this type are much costlier than the high inertia floor system.

Specifically with regard to the cooling mode, floor (or ceiling/wall) cooling involves reducing the temperature of the radiating surface up to such a point that the humidity contained in the air of the rooms may condensate on the surface itself.

To avoid this, it is necessary to install humidity sensors in the home which control the switching ON of one or more dehumidifiers so as to ensure the humidity in the different rooms does not exceed the condensation value (while obviously maintaining a given safety margin).

In order to decrease the cost of the system, simplify the management thereof and reduce the cooling mode response time, the floor system is increasingly used for the heating mode and the fan coils for the cooling mode.

For example, one or more fan coils may be used in a same room, controlled by a room temperature sensor (with/without daily/weekly scheduling) according to the size of the room for a quick cooling thereof.

Solutions employing a single fan coil serving multiple rooms by virtue of channeled outlets of the fan coils, also exist.

Patent document KR20190110405 discloses a heat pump system according to the preamble of claim 1. Said system is configured for preventing condensation that employs a combination of radiative cooling and convective cooling.

Patent document EP3337000 discloses an example of a joint water boiler-air/air heat pump air conditioning system coupled to a photovoltaic system.

The disadvantage of these solutions with fan coils is that two emission systems (floor/ceiling/wall emission systems, called radiating panels in the present description, and fan coil emission systems, called fan coils) are available which are used in uncoupled manner (the fan coils for cooling and the radiating systems for heating), thus renouncing the advantages of the relative emissions systems (fan coils: rapidity; floor: comfort uniformity).

Moreover, in the case of self-consumption of self-generated energy, for example photovoltaic (PV), the use of the fan coils alone in the cooling mode does not allow thermal energy to be stored in the floor, thus limiting the possibility of self-consumption.

There are actually three systems which operate independently from one another in the case where room temperature sensors with related actuators are used to open/close air vents to allow/not allow the inlet of air into the individual rooms, with obvious problems in terms of costs and management.

It is therefore the object of the present invention to at least partially overcome the aforesaid drawbacks.

### BRIEF DESCRIPTION OF THE INVENTION

The invention achieves the object with a heat pump system for heating and/or cooling rooms as defined in claim 1. Preferred embodiments for achieving the invention are defined in the dependent claims. According to the invention, the heat pump system comprises at least one heat source capable of heating and/or cooling a heat-carrying fluid, conventionally water, radiating panels in fluid-dynamic connection with the heat source to receive the heat-carrying fluid by means of at least a first delivery duct, such radiating panels being configured to heat and/or cool the room in which they are adapted to be placed, by radiative heat. The system further comprises at least one fan coil in fluid-dynamic connection with the heat source to receive the heat-carrying fluid by means of at least a second delivery duct, actuation means of the at least one fan coil, and a control unit of the system in communication with the heat source, the actuation means, and configured to drive the actuation means of the at least one fan coil in addition or alternatively to the radiating panel heating/cooling.

The actuation means may advantageously comprise means for actuating the at least one fan or fan coil and/or means for cutting off or deviating the delivery flow to, or returning from, the fan coils, such as, for example, zone valves, multi-area distribution systems with hydraulic separator, delivery circulators, mixer valves, two- or three-way valves arranged in the at least one fan coil.

The fan coils may be provided with control electronics thereof, provided with bus communication, which manages all the sensors and actuators of the fan coil itself, including the actuation means of the fans and two- or three-way valves for cutting off or deviating the flow of the heat-carrying fluid therein.

Essentially, the radiating panels and at least one fan coil are used together in integrated and synergistic manner. This advantageously allows achieving the following goals:
- reaching the target room temperature in a short time after a step of turning OFF the floor system (both in heating mode and in cooling mode) using the fan coils simultaneously with the radiating panels;
- quickly restoring the setpoint room temperature after an OFF hysteresis around the setpoint using the fan coils simultaneously with the radiating panels;
- using the fan coils in heating mode without using the radiating panels in form of a floor system, for example during the shoulder seasons in which it does not make sense to heat the radiating panels for a few hours (given the inertia thereof), considering that the bad weather only lasts one or a few days (winter has not yet arrived or spring is arriving);
- using both the fan coils and the floor system in cooling mode to have both a high response speed and increased comfort due to the absence of the movement of cold air.

Moreover, again in cooling mode, priority may be given to using the fan coils so as to ensure both quick cooling and dehumidifying of the room, thus avoiding the employment of complex and costly dehumidifiers.

When the room temperature has fallen around a threshold value with respect to the setpoint value (for example, 0.5K) due to the action of the at least one fan coil, the flow of water towards the radiating panels may indeed advantageously be opened, for example, mixing the delivery temperature with the return so as to limit the temperature of the water sent to the radiating panels according to the moisture level measured by suitable sensors in the individual rooms so as not to generate condensation on the radiating surface (that is, the delivery setpoint calculated by the thermoregulation is limited by another value calculated according to the humidity measured in the rooms).

Dehumidifying may also be obtained with least one fan coil and a floor system operating in parallel so long as the constraint is maintained for the temperature of the water sent to the floor system to be limited, for example, with the use of a mixer valve so as not to generate condensation thereon, according to the humidity measured by a sensor in the room.

### BRIEF DESCRIPTION OF THE DRAWINGS

Further features and advantages of the invention will become apparent from the reading of the following detailed description, given by way of non-limiting example, with the aid of the figures shown in the accompanying drawings, in which:
Figure 1 shows the block diagram of a heat pump system according to the prior art.
Figure 2 shows the block diagram of a heat pump system according to an embodiment of the invention.
Figure 3 shows an example of the diagram of the preceding drawing, highlighting the flow and/or actuation cut-off means of the fan coils controlled by an electronic control unit.

The following description of exemplary embodiments relates to the accompanying drawings. The same reference numbers in the various drawings identify the same elements or similar elements. The following detailed description does not limit the invention. The scope of the invention is defined by the appended claims.

### DETAILED DESCRIPTION OF THE INVENTION

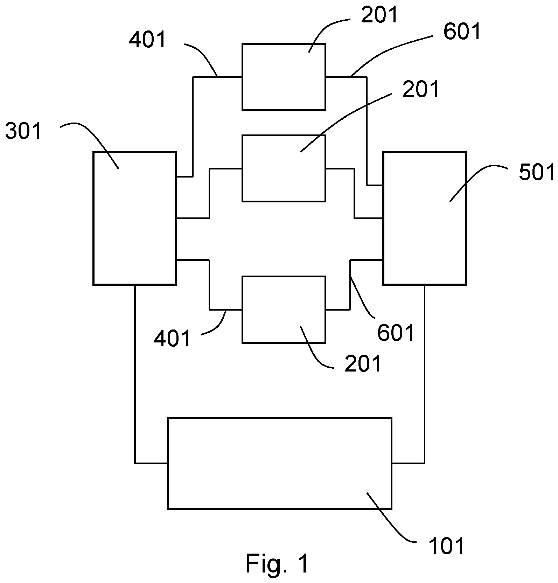

With reference to Figure 1, a heat pump system conventionally comprises:
a heat source 101, such as a boiler, for example a condensing boiler, heat pump, chiller, water heater, or similar devices capable of transferring thermal energy to a heat-carrying fluid, conventionally water; radiating panels 201, individual or in the form of panels, installed beneath the floor, in particular on insulating panels placed on the structural part of the building and concrete screed, adapted to receive the heat-carrying fluid and exchange thermal energy with the overlying space by radiative heat;
distribution manifolds 301 receiving the heat-carrying fluid from the heat source 101 for the distribution of the heat-carrying fluid towards the radiating panels 201 by means of delivery conduits 401; return manifolds 501 sending the heat-carrying fluid outlet from the radiating panels 201 back to the heat source 101 by means of return conduits 601.

There may be further components, such as mixers capable of mixing the delivery fluid with the return fluid to obtain a better regulation of the room temperature (not shown in the drawings).

In certain known configurations, the manifolds, conventionally the return manifolds, may contain thermoelectric heads which act as actuators for cut-off valves of the flow from/to the radiating panels.

This may be used to actuate/deactivate a part or the entire heat pump system based on an electric command originating from a control unit. This is particularly advantageous within the scope of the present invention for regulating the flow of heat-carrying fluid towards the heat pump system independently of the flow of fluid outlet from the heat source which may thus be directed, entirely or in part, towards one or more fan coil units, commonly called fan coils, without the need to act on the heat source itself.

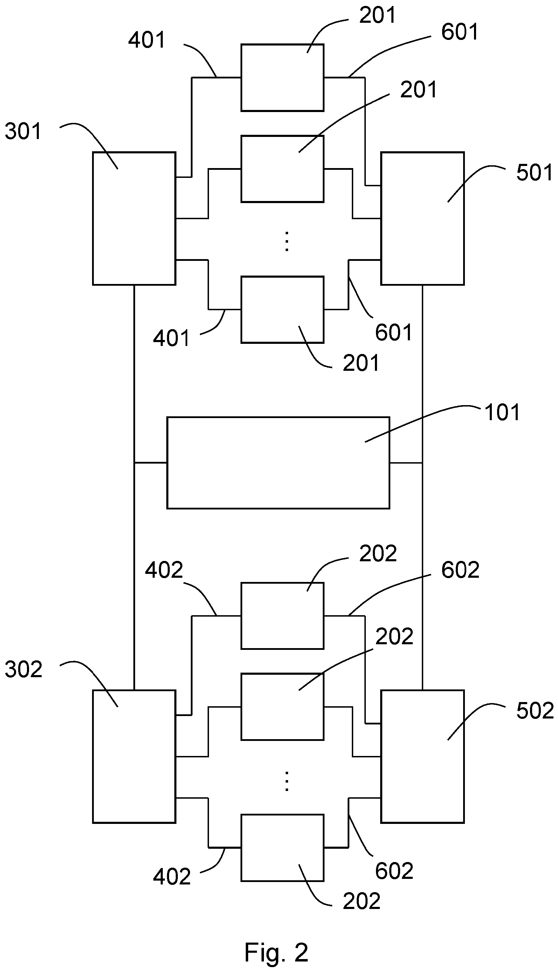

Figure 2 shows an implementation of the present invention in which the heat pump system described with reference to Figure 1 is integrated with one or more fan coils 202 receiving the heat-carrying fluid from the same heat source 101 which feeds the radiating panels 201. The drawing shows a non-limiting example of a configuration in which other delivery 302 and return 502 manifolds than those of the radiating circuit are used. Several alternatives are possible. For example, one or more outlets of the distribution and/or return conduits of the heat pump system may be employed to drive the at least one fan coil with or without flow cut-off valves, or dedicated distribution circuits may be provided which collects the fluid from an outlet of the distribution manifolds, which in turn are connected with a heat-carrying fluid distribution manifold to one or more fan coils in cascade or directly by a delivery pipe of the energy source. The same for the return flow. The same return manifolds of the radiating panels or dedicated manifold circuits possibly in direct connection with the energy source, may be used.

An alternative configuration may use delivery/return manifolds on which zone valves are mounted, or hydraulic separators downstream of which restart circulators are mounted, one per area, and possibly mixer valves and then, in the case of an area divided into rooms, a manifold with zone valves for each room.

Whatever configuration implemented, the result is the possibility of directing the heat-carrying fluid towards all or part of the radiating pipes and/or towards all or part of the fan coils provided in addition or alternatively to the radiating system, and correspondingly bringing the heat-carrying fluid outlet from the radiating panels and/or the fan coils back towards the energy source to close the circuit.

The integration of the radiating panels with the fan coils is made possible by the employment of a common control unit, also called HHP regulator in the present description, which communicates with both systems to drive the actuation/deactivation thereof in coordinated manner. For example, the control unit may be configured to execute one of the following operations: actuating both the fan coils and the radiating panels in heating mode (with the option of turning OFF the at least one fan coil or the radiating panels when the room temperature has exceeded a given threshold value with respect to a setpoint value), actuating the fan coils in heating mode while keeping the radiating panels deactivated, actuating the radiating panels in heating mode while keeping the fan coils deactivated, initially actuating the fan coils in heating mode and then, when a threshold temperature is reached, actuating the radiating panels in heating mode in addition or alternatively to the fan coils when the room temperature has exceeded a given threshold value with respect to a setpoint value; actuating both the fan coils and the radiating panels in cooling mode (with the option of turning OFF the fan coils or the radiating panels when the room temperature has fallen below a given threshold value with respect to a setpoint value), initially actuating the fan coils in cooling mode and then also actuating the radiating panels in cooling mode when the room temperature has fallen below a given threshold value with respect to a setpoint value, actuating the radiating panels alone in cooling mode with the aim of controlling the room temperature, actuating the fan coils alone in cooling mode with the aim of controlling the room humidity around the assigned setpoint.

Each time the radiating panels are actuated in cooling mode, there is a need to limit the delivery temperature according to the humidity value read in the different rooms to avoid the formation of condensation on the surface of the radiating panels. This may be done by using the fan coils in cooling mode as explained above.

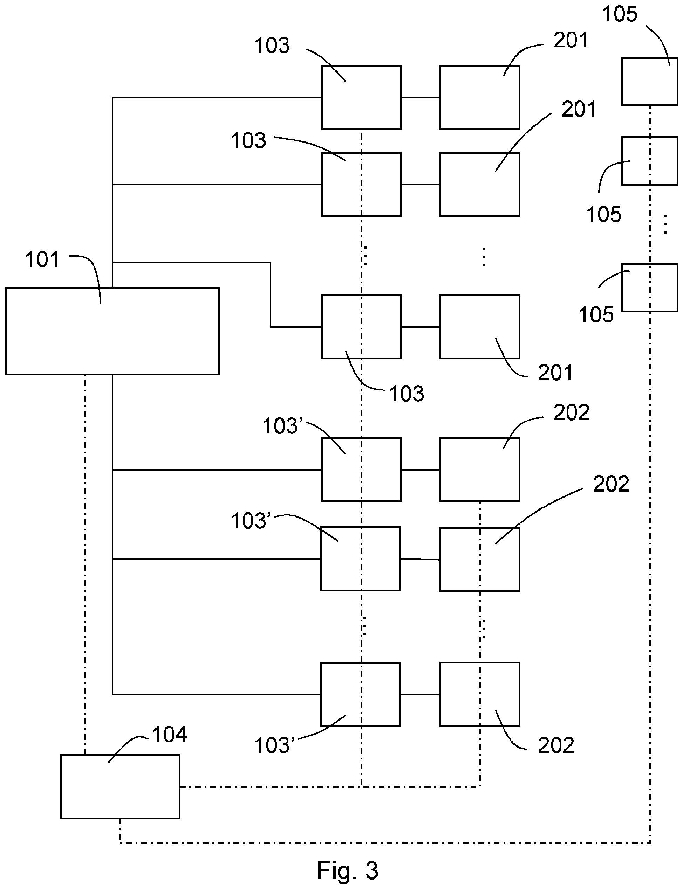

Figure 3 shows an example of the connection between thermal generating unit 101 and radiating panels/fan coils by means of the interposition of the elements indicated by reference numeral 103, 103'. These are electronically controllable valves which may be indifferently positioned on the delivery and/or return circuit of each radiating panel and fan coil or on part thereof to allow controlling the distribution of the heat-carrying fluid in capillary manner by the control unit, which controls the operation of the system indicated in the drawings by numeral 104.

In addition or alternatively to the flow cut-off valves, actuation means capable of cutting off the operation of the fan coils independently of the flow of the heat-carrying fluid may be provided on the fan coil circuit. For example, the fan coils may integrate a (2-way or 3-way) shut-off valve therein so as to shut off (2-way) or deviate (3-way) the flow of the heat-carrying fluid. Such shut-off valves may be controlled by the control electronics of the fan coils themselves according to the information/commands received via bus from the control unit 104.

In particular, since the fan coils conventionally comprise an air/heat-carrying fluid exchanger and a fan adapted to convey air from the room towards the exchanger and then, towards the room again after the heat exchange with the heat-carrying fluid, the actuation means of the at least one fan coil may be electronic or electromechanical switches which interrupt the electric supply circuit of said fans and more generally, set the number of revolutions thereof.

The communication between the control unit and valves, as well as the drive means of the fans of the fan coils, advantageously is a bus communication, for example exploiting addressing techniques known to skilled experts.

There may be temperature and/or humidity sensors 105 in each space, which are interfaced with the control unit 104 so that the same control unit may continuously control the operating parameters of the system.

In particular, the employment of centrally settable fan coils allows solving the problem of the formation of humidity without resorting to the employment of costly dehumidifiers.

When the sensors detect humidity greater than the setpoint assigned to the individual room/area, the HHP generates water with adequate temperature for dehumidifying through fan coils and actuates the reference fan coil, for example by modulating the revolutions of the fan thereof. The modulating logics of the fan may be of any type. In an embodiment, the fan revolutions are set as a function of the delta between humidity measured and setpoint so as to minimize the noise (when it is not necessary to go to a high number of revolutions) but using the maximum air flow rate when there is an increased need of dehumidifying.

By employing a mixer valve, it is possible to prevent the temperature of the water sent to the floor from being too low so as to generate condensation without the need to interrupt sending cold water to the floor system, as occurs in the installations according to the prior art.

In an advantageous configuration, there are provided a hydraulic separator, mixer valves, restart pumps (a mixer valve and a restart pump for each area with the same temperature) for the areas served by the radiating panels 201 so as to ensure that the temperature of the heat-carrying fluid sent in cooling mode to the radiating panels 201 is higher than the temperature of the heat-carrying fluid sent to the fan coils 202, for example 7°C for the fan coils and 18°C for the radiating panels in form of a radiating floor system.

Thereby, continuity is thus given to the cooling function, better still, considering that the fan coils also cool in addition to dehumidifying, the cooling action of the room is sped up, in addition to providing a short reaction time to starting the system (which is not possible with the high inertia of the floor system, the problem being less felt with the ceiling/wall/dry floor radiating systems).

A fan coil is a much less costly object than a dehumidifier, moreover, not having a compressor, it is much quieter and requires little maintenance with respect to the dehumidifier.

Summarizing, the advantages induced by the use of fan coils with respect to dehumidifiers with a compressor are:
- lower cost of the fan coils with respect to the dehumidifier;
- lower maintenance cost;
- less noise;
- increased dehumidifying speed (greater power which can be supplied in latent manner);

increased speed in reaching the setpoint room temperature in heating mode by virtue of the shorter response time of the fan coils with respect to the radiating panels
increased speed in reaching the setpoint room temperature in cooling mode by virtue of the ability to generate a sensible cooling effect while dehumidifying also occurs;
   - floor cooling continuity is ensured while dehumidifying occurs;
   - single user interface for temperature and humidity setting, with subsequent improved usability and appearance;
   - employment of fan coils and room sensors connected by bus to the regulator results in lower cost and increased simplicity of the cabling, with the possibility of remotely managing the control and diagnostics of the entire system (connectivity).

The integrated radiating panels/fan coil structure is advantageous when employed in combination with an electrical energy self-generation system, for example a photovoltaic system.

In this type of systems, one or more photovoltaic panels convert sunlight into direct electric current. The direct current is transformed into alternating current, by means of converters, to be employed as a source of energy to support the energy originating from the low voltage power distribution lines.

The optimal operation of a photovoltaic system provides using all or most of the energy generated, which would otherwise be dispersed towards the main electric line.

In traditional systems, when surplus power generated by an electrical energy self-generation system, for example a photovoltaic system, is available, the room and/or delivery temperature conventionally are varied to allow increased storage of thermal energy in the system by increasing the frequency of the heat pump compressor and possibly, if the user enabled them by means of a suitable parameter, turning ON the electric back-up/boost resistors to consume such a surplus.

However, when the heat pump and the resistors are not able to absorb all the surplus power because the thermal input which can be dissipated by the radiating panels is less than the thermal input generated by the heat pump, the frequency of the compressor cannot reach its maximum and the resistors may not be turned ON with an increase of energy exported towards the network.

By virtue of the possibility of being able to act independently on the radiating panels and fan coils, the system according to the invention is particularly adapted to manage similar energy surplus situations and, more generally, the optimal self-consumption of the energy generated, for example, by a photovoltaic system. Specifically:

### In Heating Mode

If the power which can be dissipated through the radiating panels and/or into the buffer, when present, were not sufficient to absorb all the power exported towards the network despite increasing the setpoint of the room temperature and/or of the delivery temperature of the heat-carrying fluid and/or the setpoint temperature of the buffer, and that is if the frequency of the compressor of the heat pump heat source were not at the maximum value or if, with the compressor at the maximum value, the electric back-up/boost resistors were not switched ON, the fan coils together with the radiating panels may also be actuated so as to dissipate increased power towards the room, and therefore regulate the compressor at maximum power, if then, while the fan coils were turned ON in this mode, the temperature conditions of the heat-carrying fluid allowed increasing the revolutions of the compressor or, with compressor at maximum revolutions, it were possible to turn ON the electric resistors without exceeding the switching OFF conditions on the delivery setpoint, such actions could advantageously be undertaken (so as to maximize the quantity of thermal energy in the radiating panels).

This is possible so long as the room temperature and/or the heat-carrying fluid delivery temperature does not exceed the setpoint value set for the self-consumption step (with suitable OFF hysteresis).

The room temperature setpoint may be set individually for each room with/without daily/weekly scheduling on several temperature levels.

Similarly, in the case where the fan coils are actuated and the temperature setpoints are not sufficient to absorb all the available power, the radiating panels may also be actuated by operating, also in this case, so as to maximize the amount of thermal energy in said radiating panels, and if the user enabled them by means of a suitable parameter, the electric back-up/boost resistors may be turned ON, always in respect of the setpoint delivery temperature.

In the case of greater photovoltaic power than the consumption of the house, in order to start the generator in heating mode so that it consumes such a generation excess of electric power from renewable source, the room setpoint may be considered with various approaches for the different rooms:
- adding a setpoint temperature delta which can be set by the user and/or installer, to the current setpoint;
- equalizing the current setpoint to a max temperature value, which can be set by the user and/or installer, which can be reached during the self-consumption step (with the related ON and OFF hysteresis);
- equalizing the current setpoint to the comfort period temperature value if the scheduled programming is in a period of decreased temperature (with the related ON and OFF hysteresis);
- equalizing the current setpoint to the comfort period temperature value by adding thereto a setpoint temperature delta which can be set by the user and/or installer, if the scheduled programming is in a period of decreased temperature (with the related ON and OFF hysteresis).

Alternatively or in addition to the above-described actions for the room setpoint, the system delivery temperature setpoint may be increased by adding a setpoint temperature delta which can be set by the user and/or installer, to the current setpoint.

### In Cooling Mode

In this mode, priority is given to using fan coils to absorb thermal input generated by the heat pump while exported photovoltaic power is used, called surplus power (that is, so as to ensure a quick cooling and dehumidifying of the room).

If the compressor is not capable of going to maximum power (because the water delivery setpoint was reached despite all the surplus power not being absorbed), then the flow of water is also opened towards the radiating panels, thus mixing the delivery temperature with the return and/or regulating the flow rate of the radiating panels so as to absorb only the photovoltaic power still exported; when, even doing this, the compressor is not capable of going to maximum power, the compressor frequency is limited to a value which is less than the maximum frequency so that all the surplus power is absorbed, it being understood that the regulating system of the generator varies the value thereof in order to reach the heat-carrying fluid delivery temperature setpoint.

In another configuration, priority is given to using the radiating panels over the fan coils to absorb thermal input generated by the heat pump while it uses exported photovoltaic power so as to first exploit the mass of thermal accumulation of the radiating panels itself.

The temperature of the water sent to the radiating panels may be limited to the low end by the moisture level measured by suitable sensors in the individual rooms so as not to generate condensation on the radiating surface (that is, the delivery setpoint calculated by the thermoregulation is limited by another value calculated according to the humidity measured in the rooms).

This is possible as long as the room temperature does not fall below the setpoint value set for the self-consumption step (with suitable ON and OFF hysteresis).

The possibility of storing thermal energy in cooling mode in the floor system, in parallel with the use of the fan coils for storing thermal energy in the air and indirectly in the thermal masses lapped by the air (for example, walls, furniture, surface part of the floor) allows the following advantages:
- significantly increasing the amount of energy which may be stored in the system and therefore, increasing the percentage of self-consumption from PV;
- using the thermal inertia of the radiating panels (especially of the high inertia floor system) to release the energy stored in the hours following the excess availability of photovoltaic power, and therefore in the nighttime hours, thus allowing the user to keep the house cool also at night without the need to turn ON the fan coils (unless there is a need to dehumidify), and thus limiting noisiness and maximizing comfort.

In the case of greater photovoltaic power than the consumption of the house, in order to start the generator in cooling mode so that it consumes such a generation excess of electric power from renewable source, the room setpoint may be considered with various approaches for the different rooms:
- subtracting a setpoint temperature delta which can be set by the user and/or installer, from the current setpoint;
- equalizing the current setpoint to a min temperature value which can be reached during the self-consumption step (with the related ON and OFF hysteresis);
- equalizing the current setpoint to the comfort period temperature value if the scheduled programming is in a period of decreased temperature (with the related ON and OFF hysteresis);
- equalizing the current setpoint to the comfort period temperature value by subtracting therefrom a setpoint temperature delta which can be set by the user and/or installer, if the scheduled programming is in a period of decreased temperature (with the related ON and OFF hysteresis).

Alternatively or in addition to the above-described actions for the room setpoint, the system delivery temperature setpoint may be decreased by subtracting a setpoint temperature delta which can be set by the user and/or installer, from the current setpoint.

In a system with a ventilation system with/without heat recovery, provided with a heat exchanger capable of heating/cooling the air distributed in the different rooms, the control may be applied as described above because the distribution of hot/cold air through the ventilation system is equivalent to using the fan coils, especially if it is possible to regulate, with suitable air vents, the amount of air which is introduced into the individual rooms, and even more effectively if used when described in Italian Patent Application No. 102019000005292.

The user and the technician may set such an operating mode in any type of system capable of performing the heating and/or cooling service such that the control system only uses PV power which would otherwise be exported.

The room temperature in the "standard self-consumption" mode is modified as described above (room setpoint is increased/decreased according to whether the generator is in heating/cooling mode) and, accordingly, the setpoint set by the end user (in the absence of the excess of PV generation) is always ensured.

Instead, in the "only self-consumption" mode, the room temperature is not regulated by the setpoint set by the end user, rather by the availability of self-generated photovoltaic energy and which would otherwise be exported towards the network. That is, the generator is not started based on the room setpoint required by the user, rather only when surplus photovoltaic power is available.

If the generation of photovoltaic power were not sufficient to heat/cool the room to the setpoint required by the end user, it could bypass the above-described regulating mode and reset the HHP control according to the room setpoint or in "standard self-consumption" mode (that is, it may be done in different modes, for example, only to bring back/reach the room temperature once, after which the system returns to "only self-consumption" mode, or for a time, for example max 3 hours, or up to a maximum cost value of the electrical energy consumed that day for the heating/cooling/DHW functions).

## Claims

1. A heat pump system for heating and/or cooling rooms, said heat pump system being supplied by electrical energy at least in part originating from an electrical energy self-generation system and comprising at least one heat source (101) capable of heating and/or cooling a heat-carrying fluid, usually water, radiating panels (201) in fluid-dynamic connection with the heat source (101) to receive the heat-carrying fluid by means of at least a first delivery duct (401), said radiating panels (201) being configured to heat and/or cool the room wherein they are adapted to be placed, by radiative heat, further comprising at least one fan coil (202) in fluid-dynamic connection with the heat source (101) to receive the heat-carrying fluid by means of at least a second delivery duct (402), actuation means (103) of the at least one fan coil (202), humidity and/or temperature sensors (105) and a control unit (104) of the heat pump system in communication with the heat source (101), the actuation means (103) and the sensors, and configured to drive the actuation means (103) of the at least one fan coil (202), directly or by means of the same at least one fan coil (202), so as to obtain a heating and/or cooling effect alternatively or in addition to the heating and/or cooling effect induced by the radiating panels (201) **characterized in that** the control unit (104) is configured to actuate the at least one fan coil (202) when surplus power generated by the electrical energy self-generation system is available and the radiating panels (201) are not capable of entirely absorbing the power exported from the electrical energy self-generation system through the heat pump system or, vice versa, to actuate the radiating panels when the at least one fan coil (202) is not capable of entirely absorbing the power exported from the electrical energy self-generation system.

2. A system according to claim 1, wherein the at least one fan coil (202) comprise an air/heat-carrying fluid exchanger and a fan adapted to convey air from the room towards the exchanger and then, towards the room again after the heat exchange with the heat-carrying fluid, the actuation means (103) of the at least one fan coil (202) comprising actuation means of said at least one fan.

3. A system according to claim 1 or 2, wherein the actuation means (103) of the at least one fan coil (202) comprises means for cutting off the delivery flow towards the at least one fan coil (202) in communication with the control unit (104), which control unit is configured to allow/cut off the delivery flow of the heat-carrying fluid towards the at least one fan coil (202) alternatively or in addition to the delivery flow towards the radiating panels (201).

4. A system according to one or more of the preceding claims, wherein the actuation means (103) of the at least one fan coil (202) comprises means for cutting off or deviating the flow, such as for example, two- or three-way valves integrated in the at least one fan coil and controlled by electronics in the at least one fan coil (202) on the basis of actuation commands sent to the at least one fan coil (202) by the control unit (104).

5. A system according to one or more of the preceding claims, wherein actuation means (103) of the radiating panels (201) in communication with the control unit (104), are provided.

6. A system according to claim 5, wherein the actuation means of the radiating panels comprise means (103) for cutting off the flow of the heat-carrying fluid to, or from, at least part of the radiating panels (201), said cut-off means being in communication with the control unit (104), which control unit is configured to allow/cut off the delivery flow to, or return flow from, at least part of the radiating panels (201).

7. A system according to one or more of the preceding claims, wherein there are provided a hydraulic separator, mixer valves, restart pumps for the areas served by the radiating panels (201) so as to ensure the temperature of the heat-carrying fluid sent in cooling mode to the radiating panels (201) is higher than the temperature of the heat-carrying fluid sent to the at least one fan coil (202).

8. A system according to one or more of the preceding claims, wherein the control unit (104) is configured to perform one of the operations selected from the group consisting of: actuating both the at least one fan coil and the radiating panels in heating mode by optionally turning OFF the at least one fan coil or the radiating panels when the room temperature has exceeded a given threshold value with respect to a setpoint value, actuating the at least one fan coil in heating mode while keeping the radiating panels deactivated, actuating the radiating panels in heating mode while keeping the at least one fan coil deactivated, initially actuating the at least one fan coil in heating mode and then, when a threshold temperature is reached, actuating the radiating panels in heating mode in addition or alternatively to the at least one fan coil when the room temperature has exceeded a given threshold value with respect to a setpoint value; actuating both the at least one fan coil and the radiating panels in cooling mode by optionally turning OFF the at least one fan coil or the radiating panels when the room temperature has fallen below a given threshold value with respect to a setpoint value, initially actuating the at least one fan coil in cooling mode and then also actuating the radiating panels in cooling mode when the room temperature has fallen below a given threshold value with respect to a setpoint value, actuating the radiating panels alone in cooling mode to control the room temperature, actuating the at least one fan coil alone in cooling mode to control the room humidity around the assigned setpoint.

9. A system according to one or more of the preceding claims, wherein the control unit is configured to set a temperature of the heat-carrying fluid which is adequate to dehumidifying and actuating the corresponding at least one fan coil (202) when a humidity greater than the assigned setpoint is detected by the sensors (105).

10. A system according to claim 9, wherein the control unit is configured to modulate the revolutions of the fans of the at least one fan coil as a function of the difference between the humidity measured and the setpoint by setting increased air flow rate values only when there is an increased need for dehumidification, so as to minimize the noise of the at least one fan.

11. A system according to one or more of the preceding claims, wherein the control unit (104) is configured to actuate the at least one fan coil (202) when the frequency of the compressor cannot reach the maximum thereof, or in heating mode, if the compressor is at maximum frequency and the resistors cannot be switched ON because the thermal input which can be dissipated by the radiating panels is less than the thermal input generated by the heat pump.

12. A system according to one or more of the preceding claim from 1 to 10, wherein the control unit (104) is configured to actuate the radiating panels (201) when the frequency of the compressor cannot reach the maximum thereof or, in heating mode, if the compressor is at maximum frequency and the resistors cannot be switched ON because the thermal input which can be dissipated by the at least one fan coil is less than the thermal input generated by the heat pump.

13. A system according to one or more of the preceding claims, wherein if the power which can be dissipated through the radiating panels and/or into the buffer, when present, while increasing in heating mode, or decreasing in cooling mode, the setpoint of the room temperature and/or of the delivery temperature of the heat-carrying fluid and/or the setpoint temperature of the buffer were not sufficient to absorb all the power exported towards the network, and that is if the frequency of the compressor of the heat source to heat pump were not at the maximum value or if, with the compressor at the maximum value and in heating mode, the electric back-up/boost resistors were not switched ON, the control unit (104) is configured to also actuate the at least one fan coil together with the radiating panels so as to dissipate increased power towards the room, and therefore regulate the compressor at maximum power and, if in heating mode and if the user enabled them by means of a suitable parameter, turn ON the electric resistors, again in compliance with the setpoint delivery temperature.

14. A system according to one or more of the preceding claims wherein, if the power which can be dissipated through the at least one fan coil is not sufficient to absorb all the power exported towards the network, the control unit (104) is configured to also actuate the radiating panels together with the at least one fan coil so as to dissipate increased power towards the room, and, if in heating mode and if the user enabled them by means of a suitable parameter, turn ON the electric resistors, again in compliance with the setpoint delivery temperature.

15. A system according to one or more of the preceding claims, wherein, in the case of excess production of electric power from renewable source, if the heat source is in heating mode, the control unit is configured to set the room and/or delivery and/or buffer, when present, setpoint with the related ON and OFF hysteresis according to one of the following options:
- adding a setpoint temperature delta which can be set by the user and/or installer, to the setpoint;
- equalizing the setpoint to a max temperature value, which can be set by the user and/or installer, which can be reached during the self-consumption step;
- equalizing the setpoint to the comfort period temperature value, if the scheduled programming is in a period of decreased temperature;
- equalizing the setpoint to the comfort period temperature value by adding thereto a setpoint temperature delta which can be set by the user and/or installer, if the scheduled programming is in a period of decreased temperature.

16. A system according to one or more of the preceding claims from 11 to 15, wherein in cooling mode, the control unit (104) is configured to give priority to the use of the at least one fan coil (202) with respect to the radiating panels (201) to absorb thermal input generated by the heat pump while it uses exported self-generated power so as to ensure a quick cooling and dehumidifying of the room.

17. A system according to claim 14, wherein if the compressor is not able to go to maximum power because the water delivery setpoint was reached, while the heat-carrying fluid is sent to at least one fan coil, the control unit is configured to also open the flow of water towards the radiating panels, thus mixing the delivery temperature with the return and/or regulating the flow rate of the radiating panels so as to absorb only the self-generated power still exported.

18. A system according to claim 16, wherein if the compressor is not able to go to maximum power, the control unit is configured to limit the frequency of the compressor to a value which is less than the maximum frequency so that all the surplus power is absorbed, it being understood that the regulating system of the generator varies the value thereof in order to reach the heat-carrying fluid delivery temperature setpoint.

19. A system according to one or more of the preceding claims, wherein in cooling mode, the control unit (104) is configured to primarily use the radiating panels with respect to the at least one fan coil to absorb thermal input generated by the heat pump while it uses exported self-generated power so as to exploit the mass of thermal accumulation of the radiating panels themselves.

20. A system according to one or more of the preceding claims, wherein if the compressor is not able to go to maximum power because the water delivery setpoint was reached while the radiating system is actuated, the control unit is configured to also open the flow of water towards the at least one fan coil, thus mixing the delivery water with the return according to the humidity measured by the room sensors, so that condensation is not generated on the radiating surfaces in the case of operation in cooling mode.

21. A system according to one or more of the preceding claims, wherein in the case of excess production of electric power from renewable source, and in cooling mode, the control unit is configured to set the room or delivery setpoint with the related ON and OFF hysteresis according to one of the following options:
- subtracting a setpoint temperature delta which can be set by the user and/or installer, from the current setpoint;
- equalizing the current setpoint to a minimum temperature value, which can be reached during the self-consumption step;
- equalizing the current setpoint to the comfort period temperature value, if the scheduled programming is in a period of decreased temperature;
- equalizing the current setpoint to the comfort period temperature value by subtracting therefrom a setpoint temperature delta which can be set by the user and/or installer, if the scheduled programming is in a period of decreased temperature.

22. A system according to one or more of the preceding claims, wherein the control unit (104) is configured to read the moisture level by means of sensors to correspondingly limit the temperature of the water to be sent to the radiating panels (201) so as not to generate condensation on the radiating surface.

23. A system according to one or more of the preceding claims, wherein in standard self-consumption mode, the control unit is configured to increase/decrease the room setpoint so that the room setpoint set by the user is ensured in the absence of excess production by the self-generated system.

24. A system according to one or more of the preceding claims, wherein in self-consumption mode, the control unit is configured to actuate the heat source at a frequency value of the compressor, and possibly, if in heating mode, if they have been actuated by a specific parameter which can be set by the user, actuate the electrical resistors so as to avoid the self-generated power produced from being exported towards the network.

25. A system according to claim 23, wherein if the self-generated power production were not sufficient to heat/cool the room up to the setpoint set by the end user, the control unit is configured to bypass the self-consumption mode alone and reset the control according to the room setpoint or in standard self-consumption mode.

26. A system according to one or more of the preceding claims wherein the self-generation system is a photovoltaic system and wherein the self-generated power is a photovoltaic power.

## Patentansprüche

1. Wärmepumpensystem zum Heizen und/oder Kühlen von Räumen, wobei das Wärmepumpensystem zumindest teilweise mit elektrischer Energie, die von einem elektrischen Energie-Eigenerzeugungssystem stammt, gespeist wird, und umfassend mindestens eine Wärmequelle (101), die in der Lage ist, ein Wärmeträgerfluid, üblicherweise Wasser, zu heizen und/oder zu kühlen, Strahlungsplatten (201) in fluiddynamischer Verbindung mit der Wärmequelle (101) zum Aufnehmen des Wärmeträgerfluids mittels mindestens eines ersten Zufuhrkanals (401), wobei die Strahlungsplatten (201) konfiguriert sind, um den Raum, in dem sie platziert werden können, durch Strahlungswärme zu heizen und/oder zu kühlen, ferner umfassend mindestens einen Gebläsekonvektor (202) in fluiddynamischer Verbindung mit der Wärmequelle (101) zum Aufnehmen des Wärmeträgerfluids mittels mindestens eines zweiten Zufuhrkanals (402), Betätigungsmittel (103) des mindestens einen Gebläsekonvektors (202), Feuchtigkeits- und/oder Temperatursensoren (105) und eine Steuereinheit (104) des Wärmepumpensystems, die mit der Wärmequelle (101), den Betätigungsmitteln (103) und den Sensoren in Verbindung steht und konfiguriert ist, um die Betätigungsmittel (103) des mindestens einen Gebläsekonvektors (202) direkt oder mittels desselben mindestens einen Gebläsekonvektors (202) anzutreiben, um alternativ oder zusätzlich zu der von den Strahlungsplatten (201) induzierten Heiz- und/oder Kühlwirkung eine Heiz- und/oder Kühlwirkung zu erzielen, **dadurch gekennzeichnet, dass** die Steuereinheit (104) konfiguriert ist, um den mindestens einen Gebläsekonvektor (202) zu betätigen, wenn überschüssige Leistung, die von dem elektrischen Energie-Eigenerzeugungssystem erzeugt wird, verfügbar ist und die Strahlungsplatten (201) nicht in der Lage sind, die von dem elektrischen Energie-Eigenerzeugungssystem über das Wärmepumpensystem abgegebene Leistung vollständig zu absorbieren, oder umgekehrt, um die Strahlungsplatten (201) zu betätigen, wenn der mindestens eine Gebläsekonvektor (202) nicht in der Lage ist, die von dem elektrischen Energie-Eigenerzeugungssystem abgegebene Leistung vollständig zu absorbieren.

2. System nach Anspruch 1, wobei der mindestens eine Gebläsekonvektor (202) einen Luft/Wärmeträgerfluid-Austauscher und ein Gebläse umfasst, das dazu geeignet ist, Luft aus dem Raum zu dem Austauscher und anschließend nach dem Wärmeaustausch mit dem Wärmeträgerfluid wieder zum Raum zu befördern, wobei die Betätigungsmittel (103) des mindestens einen Gebläsekonvektors (202) Betätigungsmittel des mindestens einen Gebläses umfassen.

3. System nach Anspruch 1 oder 2, wobei die Betätigungsmittel (103) des mindestens einen Gebläsekonvektors (202) Mittel zum Unterbrechen der Zufuhrströmung zu dem mindestens einen Gebläsekonvektor (202) umfassen, die mit der Steuereinheit (104) in Verbindung stehen, wobei die Steuereinheit konfiguriert ist, um die Zufuhrströmung des Wärmeträgerfluids zu dem mindestens einen Gebläsekonvektor (202) alternativ oder zusätzlich zu der Zufuhrströmung zu den Strahlungsplatten (201) zuzulassen/zu unterbrechen.

4. System nach einem oder mehreren der vorhergehenden Ansprüche, wobei die Betätigungsmittel (103) des mindestens einen Gebläsekonvektors (202) Mittel zum Unterbrechen oder Umlenken der Strömung umfassen, wie beispielsweise Zwei- oder Dreiwegeventile, die in den mindestens einen Gebläsekonvektor integriert sind und von einer Elektronik in dem mindestens einen Gebläsekonvektor (202) auf der Grundlage von Betätigungsbefehlen gesteuert werden, die von der Steuereinheit (104) an den mindestens einen Gebläsekonvektor (202) gesendet werden.

5. System nach einem oder mehreren der vorhergehenden Ansprüche, wobei die Betätigungsmittel (103) der Strahlungsplatten (201) in Verbindung mit der Steuereinheit (104) vorgesehen sind.

6. System nach Anspruch 5, wobei die Betätigungsmittel der Strahlungsplatten Mittel (103) zum Unterbrechen der Strömung des Wärmeträgerfluids zu oder von mindestens einem Teil der Strahlungsplatten (201) umfassen, wobei die Unterbrechungsmittel mit der Steuereinheit (104) in Verbindung stehen, wobei die Steuereinheit konfiguriert ist, um die Zufuhrströmung zu oder die Rücklaufströmung von mindestens einem Teil der Strahlungsplatten (201) zuzulassen/zu unterbrechen.

7. System nach einem oder mehreren der vorhergehenden Ansprüche, wobei eine hydraulische Weiche, Mischventile, Wiedereinschaltpumpen für die von den Strahlungsplatten (201) bedienten Bereiche vorgesehen sind, um sicherzustellen, dass die Temperatur des im Kühlmodus zu den Strahlungsplatten (201) geleiteten Wärmeträgerfluids höher ist als die Temperatur des zu dem mindestens einen Gebläsekonvektor (202) geleiteten Wärmeträgerfluids.

8. System nach einem oder mehreren der vorhergehenden Ansprüche, wobei die Steuereinheit (104) konfiguriert ist, um einen der Vorgänge auszuführen, die aus der Gruppe ausgewählt sind, bestehend aus: Betätigen sowohl des mindestens einen Gebläsekonvektors als auch der Strahlungsplatten im Heizmodus durch optionales Ausschalten des mindestens einen Gebläsekonvektors oder der Strahlungsplatten, wenn die Raumtemperatur einen gegebenen Schwellenwert in Bezug auf einen Sollwert überschritten hat, Betätigen des mindestens einen Gebläsekonvektors im Heizmodus, während die Strahlungsplatten deaktiviert bleiben, Betätigen der Strahlungsplatten im Heizmodus, während der mindestens eine Gebläsekonvektor deaktiviert bleibt, anfängliches Betätigen des mindestens einen Gebläsekonvektors im Heizmodus und dann, wenn eine Schwellentemperatur erreicht ist, Betätigen der Strahlungsplatten im Heizmodus zusätzlich oder alternativ zu dem mindestens einen Gebläsekonvektor, wenn die Raumtemperatur einen gegebenen Schwellenwert in Bezug auf einen Sollwert überschritten hat; Betätigen sowohl des mindestens einen Gebläsekonvektors als auch der Strahlungsplatten im Kühlmodus durch optionales Ausschalten des mindestens einen Gebläsekonvektors oder der Strahlungsplatten, wenn die Raumtemperatur unter einen gegebenen Schwellenwert in Bezug auf einen Sollwert gefallen ist, anfängliches Betätigen des mindestens einen Gebläsekonvektors im Kühlmodus und dann auch Betätigen der Strahlungsplatten im Kühlmodus, wenn die Raumtemperatur unter einen gegebenen Schwellenwert in Bezug auf einen Sollwert gefallen ist, Betätigen der Strahlungsplatten allein im Kühlmodus, um die Raumtemperatur zu steuern, Betätigen des mindestens einen Gebläsekonvektors allein im Kühlmodus, um die Raumluftfeuchtigkeit um den zugewiesenen Sollwert zu steuern.

9. System nach einem oder mehreren der vorhergehenden Ansprüche, wobei die Steuereinheit konfiguriert ist, um eine Temperatur des Wärmeträgerfluids einzustellen, die zum Entfeuchten geeignet ist, und den entsprechenden mindestens einen Gebläsekonvektor (202) zu betätigen, wenn von den Sensoren (105) eine Feuchtigkeit erfasst wird, die größer als der zugewiesene Sollwert ist.

10. System nach Anspruch 9, wobei die Steuereinheit konfiguriert ist, um die Umdrehungen der Gebläse des mindestens einen Gebläsekonvektors in Abhängigkeit von der Differenz zwischen der gemessenen Feuchtigkeit und dem Sollwert zu modulieren, indem sie erhöhte Luftdurchsatzwerte nur dann einstellt, wenn ein erhöhter Bedarf an Entfeuchtung besteht, um das Geräusch des mindestens einen Gebläses zu minimieren.

11. System nach einem oder mehreren der vorhergehenden Ansprüche, wobei die Steuereinheit (104) konfiguriert ist, um den mindestens einen Gebläsekonvektor (202) zu betätigen, wenn die Frequenz des Kompressors nicht ihr Maximum erreichen kann, oder im Heizmodus, wenn der Kompressor bei maximaler Frequenz ist und die Widerstände nicht eingeschaltet werden können, weil die Wärmeeinbringung, die von den Strahlungsplatten abgeführt werden kann, geringer ist als die von der Wärmepumpe erzeugte Wärmeeinbringung.

12. System nach einem oder mehreren der vorhergehenden Ansprüche von 1 bis 10, wobei die Steuereinheit (104) konfiguriert ist, um die Strahlungsplatten (201) zu betätigen, wenn die Frequenz des Kompressors nicht ihr Maximum erreichen kann, oder im Heizmodus, wenn der Kompressor bei maximaler Frequenz ist und die Widerstände nicht eingeschaltet werden können, weil die Wärmeeinbringung, die von dem mindestens einen Gebläsekonvektor abgeführt werden kann, geringer ist als die von der Wärmepumpe erzeugte Wärmeeinbringung.

13. System nach einem oder mehreren der vorhergehenden Ansprüche, wobei, wenn die Leistung, die durch die Strahlungsplatten und/oder in den Pufferspeicher, falls vorhanden, abgeführt werden kann, während einer Erhöhung im Heizmodus oder einer Verringerung im Kühlmodus des Sollwerts der Raumtemperatur und/oder der Zufuhrtemperatur des Wärmeträgerfluids und/oder der Sollwerttemperatur des Pufferspeichers nicht ausreicht, um die gesamte in das Netz abgegebene Leistung zu absorbieren, und das heißt, wenn die Frequenz des Kompressors von der Wärmequelle zur Wärmepumpe nicht auf dem Maximalwert liegt oder wenn sich der Kompressor auf dem Maximalwert und im Heizmodus befindet und die elektrischen Backup-/Boost-Widerstände nicht eingeschaltet wurden, die Steuereinheit (104) konfiguriert ist, um auch den mindestens einen Gebläsekonvektor zusammen mit den Strahlungsplatten zu betätigen, um eine erhöhte Leistung an den Raum abzuführen, und somit den Kompressor auf maximale Leistung zu regeln und, wenn im Heizmodus und der Benutzer dies durch einen geeigneten Parameter freigegeben hat, die elektrischen Widerstände wieder in Abhängigkeit von der Sollwert-Zufuhrtemperatur einzuschalten.

14. System nach einem oder mehreren der vorhergehenden Ansprüche, wobei, wenn die Leistung, die über den mindestens einen Gebläsekonvektor abgeführt werden kann, nicht ausreicht, um die gesamte in das Netz abgegebene Leistung zu absorbieren, die Steuereinheit (104) konfiguriert ist, um auch die Strahlungsplatten zusammen mit dem mindestens einen Gebläsekonvektor zu betätigen, um eine erhöhte Leistung in den Raum abzuführen, und, wenn im Heizmodus und der Benutzer dies durch einen geeigneten Parameter freigegeben hat, um die elektrischen Widerstände wieder in Abhängigkeit von der Sollwert-Zufuhrtemperatur einzuschalten.

15. System nach einem oder mehreren der vorhergehenden Ansprüche, wobei im Falle einer Überschussproduktion von elektrischer Leistung aus einer erneuerbaren Quelle, wenn sich die Wärmequelle im Heizmodus befindet, die Steuereinheit konfiguriert ist, um den Raum- und/oder Zufuhr- und/oder Pufferspeichersollwert, falls vorhanden, mit der zugehörigen EIN- und AUS-Hysterese gemäß einer der folgenden Optionen einzustellen:
- Hinzufügen eines vom Benutzer und/oder Installateur einstellbaren Sollwert-Temperaturdeltas zum Sollwert;
- Abgleichen des Sollwerts mit einem vom Benutzer und/oder Installateur einstellbaren maximalen Temperaturwert, der während des Eigenverbrauchsschritts erreicht werden kann;
- Abgleichen des Sollwerts mit dem Komfortzeitraum-Temperaturwert, wenn sich die geplante Programmierung in einen Zeitraum verringerter Temperatur fällt;
- Abgleichen des Sollwerts mit dem Komfortzeitraum-Temperaturwert durch Hinzufügen eines vom Benutzer und/oder Installateur einstellbaren Sollwert-Temperaturdeltas, wenn sich die geplante Programmierung in einen Zeitraum verringerter Temperatur fällt.

16. System nach einem oder mehreren der vorhergehenden Ansprüche von 11 bis 15, wobei die Steuereinheit (104) im Kühlmodus konfiguriert ist, um der Verwendung des mindestens einen Gebläsekonvektors (202) in Bezug auf die Strahlungsplatten (201) Vorrang zu geben, um die von der Wärmepumpe erzeugte Wärmeeinbringung zu absorbieren, während sie die abgegebene eigenerzeugte Leistung verwendet, um eine schnelle Kühlung und Entfeuchtung des Raums sicherzustellen.

17. System nach Anspruch 14, wobei, wenn der Kompressor nicht in der Lage ist, auf maximale Leistung zu gehen, weil der Wasserzufuhr-Sollwert erreicht wurde, während das Wärmeträgerfluid zu dem mindestens einen Gebläsekonvektor geleitet wird, die Steuereinheit konfiguriert ist, um auch die Wasserströmung zu den Strahlungsplatten zu öffnen, wodurch die Zufuhrtemperatur mit der Rücklauftemperatur gemischt wird und/oder der Durchsatz der Strahlungsplatten reguliert wird, um nur die noch abgegebene eigenerzeugte Energie zu absorbieren.

18. System nach Anspruch 16, wobei, wenn der Kompressor nicht in der Lage ist, auf maximale Leistung zu gehen, die Steuereinheit konfiguriert ist, um die Frequenz des Kompressors auf einen Wert zu begrenzen, der unter der maximalen Frequenz liegt, so dass die gesamte überschüssige Leistung absorbiert wird, wobei es sich versteht, dass das Regelsystem des Generators den Wert desselben variiert, um den Wärmeträgerfluid-Zufuhrtemperatur-Sollwert zu erreichen.

19. System nach einem oder mehreren der vorhergehenden Ansprüche, wobei die Steuereinheit (104) im Kühlmodus konfiguriert ist, um in erster Linie die Strahlungsplatten in Bezug auf den mindestens einen Gebläsekonvektor zu verwenden, um die von der Wärmepumpe erzeugte Wärmeeinbringung zu absorbieren, während sie die abgegebene eigenerzeugte Leistung verwendet, um die Masse der Wärmespeicherung der Strahlungsplatten selbst zu nutzen.

20. System nach einem oder mehreren der vorhergehenden Ansprüche, wobei, wenn der Kompressor nicht in der Lage ist, auf maximale Leistung zu gehen, weil der Wasserzufuhr-Sollwert erreicht wurde, während die Strahlungsplatten betätigt sind, die Steuereinheit konfiguriert ist, um auch die Wasserströmung zu dem mindestens einen Gebläsekonvektor zu öffnen, wodurch das Zufuhrwasser entsprechend der von den Raumsensoren gemessenen Feuchtigkeit mit dem Rücklauf gemischt wird, so dass im Falle des Betriebs im Kühlmodus keine Kondensation an den Strahlungsflächen erzeugt wird.

21. System nach einem oder mehreren der vorhergehenden Ansprüche, wobei im Falle einer Überschussproduktion von elektrischer Leistung aus einer erneuerbaren Quelle und im Kühlmodus, die Steuereinheit konfiguriert ist, um den Raum- oder Zufuhrsollwert mit der zugehörigen EIN- und AUS-Hysterese gemäß einer der folgenden Optionen einzustellen:
- Abziehen eines vom Benutzer und/oder Installateur einstellbaren Sollwert-Temperaturdeltas vom aktuellen Sollwert;
- Abgleichen des aktuellen Sollwerts mit einem minimalen Temperaturwert, der während des Eigenverbrauchsschritts erreicht werden kann;
- Abgleichen des aktuellen Sollwerts mit dem Komfortzeitraum-Temperaturwert, wenn sich die geplante Programmierung in einen Zeitraum verringerter Temperatur fällt;
- Abgleichen des aktuellen Sollwerts mit dem Komfortzeitraum-Temperaturwert durch Abziehen eines vom Benutzer und/oder Installateur einstellbaren Sollwert-Temperaturdeltas, wenn sich die geplante Programmierung in einen Zeitraum verringerter Temperatur fällt.

22. System nach einem oder mehreren der vorhergehenden Ansprüche, wobei die Steuereinheit (104) konfiguriert ist, um den Feuchtigkeitspegel mittels Sensoren abzulesen, um die Temperatur des an die Strahlungsplatten (201) zu leitenden Wassers entsprechend zu begrenzen, um keine Kondensation auf der Strahlungsfläche zu erzeugen.

23. System nach einem oder mehreren der vorhergehenden Ansprüche, wobei die Steuereinheit im Standard-Eigenverbrauchsmodus konfiguriert ist, um den Raumsollwert zu erhöhen/zu verringern, so dass der vom Benutzer eingestellte Raumsollwert bei fehlender Überschussproduktion durch das Eigenerzeugungssystem gewährleistet ist.

24. System nach einem oder mehreren der vorhergehenden Ansprüche, wobei die Steuereinheit im Eigenverbrauchsmodus konfiguriert ist, um die Wärmequelle mit einem Frequenzwert des Kompressors zu betätigen und gegebenenfalls im Heizmodus, wenn sie durch einen bestimmten, vom Benutzer einstellbaren Parameter betätigt wurden, die elektrischen Widerstände zu betätigen, um zu verhindern, dass die eigenerzeugte Leistung an das Netz abgegeben wird.

25. System nach Anspruch 23, wobei, wenn die eigenerzeugte Leistungsproduktion nicht ausreicht, um den Raum bis zu dem vom Endbenutzer eingestellten Sollwert zu heizen/zu kühlen, die Steuereinheit konfiguriert ist, um den Eigenverbrauchsmodus allein zu umgehen und die Steuerung entsprechend dem Raumsollwert oder in den Standard-Eigenverbrauchsmodus zurückzusetzen.

26. System nach einem oder mehreren der vorhergehenden Ansprüche, wobei das Eigenerzeugungssystem ein Photovoltaiksystem ist und wobei die eigenerzeugte Leistung eine Photovoltaikleistung ist.

## Revendications

1. Système de pompe à chaleur pour chauffer et/ou refroidir des pièces, ledit système de pompe à chaleur étant alimenté par de l'énergie électrique provenant au moins en partie d'un système d'autogénération d'énergie électrique et comprenant au moins une source de chaleur (101) capable de chauffer et/ou refroidir un fluide caloporteur, généralement de l'eau, des panneaux rayonnants (201) en liaison fluidodynamique avec la source de chaleur (101) pour recevoir le fluide caloporteur au moyen d'au moins un premier conduit de distribution (401), lesdits panneaux rayonnants (201) étant configurés pour chauffer et/ou refroidir la pièce dans laquelle ils sont adaptés pour être placés, par chaleur radiative, comprenant en outre au moins un ventilo-convecteur (202) en liaison fluidodynamique avec la source de chaleur (101) pour recevoir le fluide caloporteur au moyen d'au moins un deuxième conduit de distribution (402), des moyens d'actionnement (103) du au moins un ventilo-convecteur (202), des capteurs d'humidité et/ou de température (105) et une unité de commande (104) du système de pompe à chaleur en communication avec la source de chaleur (101), les moyens d'actionnement (103) et les capteurs, et configuré pour entraîner les moyens d'actionnement (103) du au moins un ventilo-convecteur (202), directement ou au moyen du même au moins un ventilo-convecteur (202), de manière à obtenir un effet de chauffage et/ou de refroidissement alternativement ou en plus de l'effet de chauffage et/ou de refroidissement induit par les panneaux rayonnants (201), **caractérisé en ce que** l'unité de commande (104) est configurée pour actionner l'au moins un ventilo-convecteur (202) lorsque l'énergie excédentaire générée par le système d'autogénération d'énergie électrique est disponible et que les panneaux rayonnants (201) ne sont pas capables d'absorber entièrement l'énergie exportée du système d'autogénération d'énergie électrique à travers le système de pompe à chaleur ou, inversement, pour actionner les panneaux rayonnants (201) lorsque l'au moins un ventilo-convecteur (202) n'est pas capable d'absorber entièrement l'énergie exportée du système d'autogénération d'énergie électrique.

2. Système selon la revendication 1, dans lequel l'au moins un ventilo-convecteur (202) comprend un échangeur air/fluide caloporteur et un ventilateur adapté pour transporter l'air de la pièce vers l'échangeur, puis, vers la pièce à nouveau après l'échange de chaleur avec le fluide caloporteur, les moyens d'actionnement (103) du au moins un ventilo-convecteur (202) comprenant des moyens d'actionnement dudit au moins un ventilateur.

3. Système selon la revendication 1 ou 2, dans lequel les moyens d'actionnement (103) du au moins un ventilo-convecteur (202) comprennent des moyens pour couper le flux de distribution vers l'au moins un ventilo-convecteur (202) en communication avec l'unité de commande (104), laquelle unité de commande est configurée pour permettre/couper le flux de distribution du fluide caloporteur vers l'au moins un ventilo-convecteur (202) alternativement ou en plus du flux de distribution vers les panneaux rayonnants (201).

4. Système selon une ou plusieurs des revendications précédentes, dans lequel les moyens d'actionnement (103) du au moins un ventilo-convecteur (202) comprennent des moyens pour couper ou dévier le flux, tels que, par exemple, des vannes à deux ou trois voies intégrées dans l'au moins un ventilo-convecteur et commandées par électronique dans l'au moins un ventilo-convecteur (202) sur la base de commandes d'actionnement envoyées à l'au moins un ventilo-convecteur (202) par l'unité de commande (104).

5. Système selon une ou plusieurs des revendications précédentes, dans lequel sont prévus des moyens d'actionnement (103) des panneaux rayonnants (201) en communication avec l'unité de commande (104).

6. Système selon la revendication 5, dans lequel les moyens d'actionnement des panneaux rayonnants comprennent des moyens (103) pour couper le flux du fluide caloporteur vers, ou depuis, au moins une partie des panneaux rayonnants (201), lesdits moyens de coupure étant en communication avec l'unité de commande (104), laquelle unité de commande est configurée pour permettre/couper le flux de distribution vers, ou le flux de retour depuis, au moins une partie des panneaux rayonnants (201).

7. Système selon une ou plusieurs des revendications précédentes, dans lequel il est prévu un séparateur hydraulique, des vannes mélangeuses, des pompes de redémarrage pour les zones desservies par les panneaux rayonnants (201) de manière à assurer que la température du fluide caloporteur envoyé en mode refroidissement aux panneaux rayonnants (201) soit supérieure à la température du fluide caloporteur envoyé à l'au moins un ventilo-convecteur (202).

8. Système selon l'une ou plusieurs des revendications précédentes, dans lequel l'unité de commande (104) est configurée pour effectuer l'une des opérations sélectionnées dans le groupe consistant à : actionner à la fois l'au moins un ventilo-convecteur et les panneaux rayonnants en mode chauffage en éteignant éventuellement l'au moins un ventilo-convecteur ou les panneaux rayonnants lorsque la température de la pièce a dépassé une valeur seuil donnée par rapport à une valeur de consigne, actionner l'au moins un ventilo-convecteur en mode chauffage tout en maintenant les panneaux rayonnants désactivés, actionner les panneaux rayonnants en mode chauffage tout en maintenant l'au moins un ventilo-convecteur désactivé, actionner initialement l'au moins un ventilo-convecteur en mode chauffage, puis, lorsqu'une température seuil est atteinte, actionner les panneaux rayonnants en mode chauffage en plus ou alternativement à l'au moins un ventilo-convecteur lorsque la température de la pièce a dépassé une valeur seuil donnée par rapport à une valeur de consigne ; actionner à la fois l'au moins un ventilo-convecteur et les panneaux rayonnants en mode refroidissement en éteignant éventuellement l'au moins un ventilo-convecteur ou les panneaux rayonnants lorsque la température de la pièce est tombé en dessous d'une valeur seuil donnée par rapport à une valeur de consigne, actionner initialement l'au moins un ventilo-convecteur en mode refroidissement, puis actionner également les panneaux rayonnants en mode refroidissement lorsque la température de la pièce est tombée en dessous d'une valeur seuil donnée par rapport à une valeur de consigne, actionner les panneaux rayonnants seuls en mode refroidissement pour contrôler la température de la pièce, actionner l'au moins un ventilo-convecteur seul en mode refroidissement pour contrôler l'humidité de la pièce autour de la consigne attribuée.

9. Système selon une ou plusieurs des revendications précédentes, dans lequel l'unité de commande est configurée pour régler une température du fluide caloporteur qui est suffisante pour déshumidifier et actionner l'au moins un ventilo-convecteur correspondant (202) lorsqu'une humidité supérieure à la consigne attribuée est détectée par les capteurs (105).

10. Système selon la revendication 9, dans lequel l'unité de commande est configurée pour moduler les révolutions des ventilateurs du au moins un ventilo-convecteur en fonction de la différence entre l'humidité mesurée et la consigne en réglant des valeurs accrues de débit d'air uniquement lorsqu'il y a un besoin accru de déshumidification, de manière à minimiser le bruit du au moins un ventilateur.

11. Système selon une ou plusieurs des revendications précédentes, dans lequel l'unité de commande (104) est configurée pour actionner l'au moins un ventilo-convecteur (202) lorsque la fréquence du compresseur ne peut pas atteindre son maximum, ou en mode chauffage, si le compresseur est à la fréquence maximale et que les résistances ne peuvent pas être allumées parce que l'entrée thermique qui peut être dissipée par les panneaux rayonnants est inférieure à l'entrée thermique générée par la pompe à chaleur.

12. Système selon une ou plusieurs des revendications précédentes 1 à 10, dans lequel l'unité de commande (104) est configurée pour actionner les panneaux rayonnants (201) lorsque la fréquence du compresseur ne peut pas atteindre son maximum ou, en mode chauffage, si le compresseur est à la fréquence maximale et que les résistances ne peuvent pas être allumées parce que l'entrée thermique qui peut être dissipée par l'au moins un ventilo-convecteur est inférieure à l'entrée thermique générée par la pompe à chaleur.

13. Système selon une ou plusieurs des revendications précédentes, dans lequel si l'énergie qui peut être dissipée à travers les panneaux rayonnants et/ou dans le tampon, lorsqu'il est présent, tout en augmentant en mode chauffage, ou en diminuant en mode refroidissement, la consigne de la température de la pièce et/ou de la température de distribution du fluide caloporteur et/ou la température de consigne du tampon n'était pas suffisante pour absorber toute l'énergie exportée vers le réseau, et c'est-à-dire que si la fréquence du compresseur de la source de chaleur à la pompe à chaleur n'était pas à la valeur maximale ou si, avec le compresseur à la valeur maximale et en mode chauffage, les résistances électriques de secours/supplémentaires n'étaient pas allumées, l'unité de commande (104) est configurée pour actionner également l'au moins un ventilo-convecteur conjointement avec les panneaux rayonnants de manière à dissiper une énergie accrue vers la pièce, et donc réguler le compresseur à puissance maximale et, si en mode chauffage et si l'utilisateur les a activé au moyen d'un paramètre approprié, allumer les résistances électriques, toujours conformément à la température de distribution de consigne.

14. Système selon une ou plusieurs des revendications précédentes, dans lequel, si l'énergie qui peut être dissipée à travers l'au moins un ventilo-convecteur n'est pas suffisante pour absorber toute l'énergie exportée vers le réseau, l'unité de commande (104) est configurée pour actionner également les panneaux rayonnants conjointement avec l'au moins un ventilo-convecteur de manière à dissiper une énergie accrue vers la pièce, et, si en mode chauffage et si l'utilisateur les a activé au moyen d'un paramètre approprié, allumer les résistances électriques, toujours conformément avec la température de distribution de consigne.

15. Système selon une ou plusieurs des revendications précédentes, dans lequel, en cas de production excédentaire d'énergie électrique à partir de source renouvelable, si la source de chaleur est en mode chauffage, l'unité de commande est configurée pour régler la consigne de pièce et/ou de distribution et/ou de tampon, lorsque présent, avec l'hystérésis MARCHE et ARRÊT associé selon l'une des options suivantes :
- ajouter un delta de température de consigne qui peut être réglé par l'utilisateur et/ou l'installateur, à la consigne ;
- égaliser la consigne à une valeur de température maximale, qui peut être réglée par l'utilisateur et/ou l'installateur, qui peut être atteinte lors de l'étape d'autoconsommation ;
- égaliser la consigne à la valeur de température de la période de confort, si la programmation programmée est en période de température réduite ;
- égaliser la consigne à la valeur de température de la période de confort en y ajoutant un delta de température de consigne qui peut être réglé par l'utilisateur et/ou l'installateur, si la programmation programmée est en période de température réduite.

16. Système selon une ou plusieurs des revendications précédentes 11 à 15, dans lequel en mode refroidissement, l'unité de commande (104) est configurée pour donner la priorité à l'utilisation du au moins un ventilo-convecteur (202) par rapport aux panneaux rayonnants (201) pour absorber l'entrée thermique générée par la pompe à chaleur alors qu'elle utilise l'énergie auto-générée exportée de manière à assurer un refroidissement et une déshumidification rapides de la pièce.

17. Système selon la revendication 14, dans lequel si le compresseur n'est pas en mesure d'atteindre la puissance maximale parce que la consigne de distribution d'eau a été atteinte, alors que le fluide caloporteur est envoyé à au moins un ventilo-convecteur, l'unité de commande est configurée pour ouvrir également le flux d'eau vers les panneaux rayonnants, mélangeant ainsi la température de distribution avec le retour et/ou régulant le débit des panneaux rayonnants de manière à absorber uniquement l'énergie auto-générée encore exportée.

18. Système selon la revendication 16, dans lequel si le compresseur n'est pas en mesure d'atteindre la puissance maximale, l'unité de commande est configurée pour limiter la fréquence du compresseur à une valeur qui est inférieure à la fréquence maximale de sorte que toute l'énergie excédentaire est absorbée, étant entendu que le système de régulation du générateur fait varier sa valeur afin d'atteindre la consigne de température de distribution de fluide caloporteur.

19. Système selon une ou plusieurs des revendications précédentes, dans lequel en mode refroidissement, l'unité de commande (104) est configurée pour utiliser principalement les panneaux rayonnants par rapport à l'au moins un ventilo-convecteur pour absorber l'entrée thermique générée par la pompe à chaleur tout en utilisant l'énergie auto-générée exportée de manière à exploiter la masse d'accumulation thermique des panneaux rayonnants eux-mêmes.

20. Système selon une ou plusieurs des revendications précédentes, dans lequel si le compresseur n'est pas en mesure d'atteindre la puissance maximale parce que la consigne de distribution d'eau a été atteinte pendant que le système rayonnant est actionné, l'unité de commande est configurée pour également ouvrir le flux d'eau vers l'au moins un ventilo-convecteur, mélangeant ainsi l'eau de distribution avec le retour en fonction de l'humidité mesurée par les capteurs de pièce, de sorte que la condensation ne soit pas générée sur les surfaces rayonnantes dans le cas d'un fonctionnement en mode refroidissement.

21. Système selon une ou plusieurs des revendications précédentes, dans lequel en cas de production excédentaire d'énergie électrique à partir de source renouvelable, et en mode refroidissement, l'unité de commande est configurée pour régler la consigne de pièce ou de distribution avec l'hystérésis MARCHE et ARRÊT associé selon l'une des options suivantes :
- soustraire un delta de température de consigne qui peut être réglé par l'utilisateur et/ou l'installateur, de la consigne actuelle ;
- égaliser la consigne actuelle à une valeur de température minimale, qui peut être atteinte lors de l'étape d'autoconsommation ;
- égaliser la consigne actuelle à la valeur de température de la période de confort, si la programmation programmée est en période de température réduite
- égaliser la consigne actuelle à la valeur de température de la période de confort en y soustrayant un delta de température de consigne qui peut être réglé par l'utilisateur et/ou l'installateur, si la programmation programmée est en période de température réduite.

22. Système selon une ou plusieurs des revendications précédentes, dans lequel l'unité de commande (104) est configurée pour lire le niveau d'humidité au moyen de capteurs pour limiter de manière correspondante la température de l'eau à envoyer aux panneaux rayonnants (201) de manière à ne pas générer de condensation sur la surface rayonnante.

23. Système selon une ou plusieurs des revendications précédentes, dans lequel en mode d'autoconsommation standard, l'unité de commande est configurée pour augmenter/diminuer la consigne de pièce de sorte que la consigne de pièce réglée par l'utilisateur soit assurée en l'absence de production excédentaire par le système auto-généré.

24. Système selon une ou plusieurs des revendications précédentes, dans lequel en mode d'autoconsommation, l'unité de commande est configurée pour actionner la source de chaleur à une valeur de fréquence du compresseur, et éventuellement, si en mode chauffage, si elles ont été actionnées par un paramètre spécifique qui peut être réglé par l'utilisateur, actionner les résistances électriques de manière à éviter que l'énergie auto-générée produite ne soit exportée vers le réseau.

25. Système selon la revendication 23, dans lequel si la production d'énergie auto-générée n'était pas suffisante pour chauffer/refroidir la pièce jusqu'à la consigne réglée par l'utilisateur final, l'unité de commande est configurée pour contourner le mode d'autoconsommation seul et réinitialiser la commande selon la consigne de pièce ou en mode d'autoconsommation standard.

26. Système selon une ou plusieurs des revendications précédentes, dans lequel le système d'autogénération est un système photovoltaïque et dans lequel l'énergie auto-générée est une énergie photovoltaïque.
